(19) Europäisches Patentamt
European Patent Office
Office européen des brevets

(11) Numéro de publication : **0 373 020 B1**

# (12) FASCICULE DE BREVET EUROPEEN

(45) Date de publication du fascicule du brevet : **07.09.94 Bulletin 94/36**

(51) Int. Cl.$^5$ : **G02F 1/155**

(21) Numéro de dépôt : **89403180.6**

(22) Date de dépôt : **20.11.89**

## (54) Contre-électrode pour systèmes électrochromes.

(30) Priorité : **21.11.88 FR 8815086**

(43) Date de publication de la demande : **13.06.90 Bulletin 90/24**

(45) Mention de la délivrance du brevet : **07.09.94 Bulletin 94/36**

(84) Etats contractants désignés : **AT BE CH DE ES FR GB IT LI LU NL SE**

(56) Documents cités :
**EP-A- 0 253 713**
**PATENT ABSTRACTS OF JAPAN, vol. 9, no. 151 (P-367)[1874], 26 juin 1985 ; & JP-A-60 028 630**
**APPLIED OPTICS, vol. 24, no. 15. août 1985, pages 2282-2283; S.F. COGAN et al.: "Electrochemical investigation of electrochromism in transparent conductive oxides"**
**SOLAR ENERGY MATERIALS, vol. 14, no. 3/5, novembre 1986, pages 161-174; C.M. LAMPERT et al.: "Chemical and optical properties of electrochromic nickel oxide films"**
**PATENT ABSTRACTS OF JAPAN, vol. 8, no. 219 (P-306)[1656], 5 octobre 1984 ; & JP-A-59 102 216**

(73) Titulaire : **SAINT-GOBAIN VITRAGE INTERNATIONAL**
**"Les Miroirs"**
**18, avenue d'Alsace**
**F-92400 Courbevoie (FR)**

(72) Inventeur : **Buffat, Bernard**
**123, Quai de Valmy**
**F-75010 Paris (FR)**
Inventeur : **Defendini, Francis**
**116, avenue Simon Bolivar**
**F-75019 Paris (FR)**
Inventeur : **Lerbet, François**
**228, boulevard Raspail**
**F-75014 Paris (FR)**
Inventeur : **Padoy, Christian**
**28, rue Camille St Saens**
**F-95500 Gonesse (FR)**

(74) Mandataire : **Menes, Catherine et al**
**SAINT-GOBAIN RECHERCHE 39, Quai Lucien Lefranc**
**F-93300 Aubervilliers (FR)**

EP 0 373 020 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue Saint-Denis, 75001 PARIS

## Description

La présente invention a trait aux systèmes électrochromes et plus précisément à une contre-électrode utilisable notamment pour un vitrage électrochrome fonctionnant en transmission ou en réflexion dont le changement de couleur est dû à l'insertion réversible d'ions lithium dans une couche de trioxyde de tungstène.

Les vitrages ou autres systèmes électrochromes sont des systèmes dont la couleur est modifiée sous l'action d'une différence de potentiel électrique. Le caractère électrochrome est obtenu grâce à une couche d'un oxyde d'un métal de transition, notamment une couche d'oxyde de tungstène placée entre deux couches conductrices du courant électrique, une couche électrolytique étant interposée entre la couche électrochrome et une des deux couches conductrices.

La plupart des matériaux conducteurs d'ions d'éléments de la première colonne du tableau de MENDELEIEV conviennent comme électrolytes. Ainsi a-t-on décrit des systèmes électrochromes utilisant de l'acide sulfurique ou tout autre acide fort placé au contact d'une couche d'oxyde de tungstène. Mais l'inconvénient majeur des électrolytes conducteurs protoniques est leur caractère acide qui conduit si on ne prend pas de précautions particulières à la dégradation rapide des autres couches du système dont la longévité est de ce fait extrêmement faible.

Ce défaut est moindre avec les matériaux conducteurs d'ions alcalins moins corrosifs ; les électrolytes au lithium sont plus particulièrement préférés en raison de la vitesse de diffusion élevée des ions lithium notamment dans le trioxyde de tungstène qui autorise une coloration et décoloration rapides du système.

D'autre part, pour améliorer le contraste entre l'état coloré et l'état décoloré du système, il est connu du brevet US 4 350 414 d'utiliser une contre-électrode symétrique de l'électrode formée par la couche de matériau électrochrome capable d' insérer les ions en phase de décoloration et de les relâcher en phase de coloration.

Il est également connu de la demande de brevet JP-6028630 d'utiliser un système électrochrome dont l'électrolyte est composé d'un mélange liquide de sel de lithium, de carbonate de propylène de monomère vinyl et d'eau et dont la contre-électrode est constituée d'un hydroxyde de nickel obtenu par oxydation anodique de nickel métallique.

Le problème technique qui se pose alors est de trouver un matériau convenable pour la contre-électrode, c'est-à-dire parfaitement compatible avec l'électrolyte utilisé, ne se décomposant pas sous l'action du courant électrique et surtout ne présentant pas de coloration - ou à l'état décoloré lorsque la couche de matériau électrochrome se trouve elle-même à l'état décoloré - cette dernière condition étant indispensable pour la réalisation d'un vitrage fonctionnant en transmission susceptible par exemple d'être utilisé comme vitrage de bâtiment.

L'invention a plus précisément pour obiet un vitrage électrochrome selon la revendication 1 pouvant fonctionner en transmission comportant un substrat transparent, notamment en verre revêtu d'une couche électroconductrice transparente, d'une couche d'un matériau électrochrome formé d'un oxyde d'un métal de transition, notamment de trioxyde de tungstène, d'une couche d'un matériau conducteur ionique au lithium, d'une contre-électrode et d'une seconde couche conductrice de préférence également transparente.

La contre-électrode selon l'invention est constituée par une couche d'oxyde de nickel. Les auteurs de la présente invention on constaté comme le montrent les essais plus loin reportés que l'insertion d'ions lithium est possible de façon parfaitement réversible dans une telle couche d'oxyde de nickel. Pour des raisons indiquées ultérieurement, on opère de préférence avec un oxyde de nickel hydraté, par exemple préparée dans les conditions expliquées plus loin.

Les auteurs de la présente invention ont en effet constaté que dans certaines conditions l'oxyde de nickel est un matériau susceptible d'insérer et de libérer des ions lithium sous l'action d'une différence de potentiel électrique. Mais l'électrochromisme observé est avantageusement du type anodique alors que l'oxyde de tungstène est un matériau à électrochromisme cathodique, autrement dit c'est la décoloration - et non la coloration - qui est observée lorsque des ions lithium sont insérés dans une couche d'oxyde de nickel. Associée à une couche d'oxyde de tungstène, une contre-électrode en oxyde de nickel donne donc une amélioration importante du contraste.

Le caractère électrochrome de l'oxyde de nickel est certes connu depuis plusieurs années, mais pour des systèmes cyclant dans la potasse. Le schéma réactionnel généralement admis est dans ce cas :

$$Ni(OH)_2\ (I) \leftrightarrows NiO(OH)\ (C) + H^+ + e^-$$

I indique que l'oxyde est non coloré, C qu'il est à l'état coloré. (coloration marron pour l'oxyde de nickel).

Selon une découverte des auteurs de la présente invention, le cycle est également possible avec des ions lithium et non des protons et peut se schématiser de la façon suivante :

$$\begin{array}{ccc} & (1) & \\ Ni[O]_B\ (I) & \rightleftharpoons & Ni[O]_A\ (C) + H^+ + e^- \\ \updownarrow +x\ Li^+\ (4) & & \updownarrow +x\ Li^+\ (2) \\ & (3) & \\ Li_xNi[O]_B & \rightleftharpoons & Li_xNi[O]_A\ (I) + H^+ + e^- \end{array}$$

On a ainsi défini 3 équilibres électrochromes supplémentaires ; l'invention s'intéresse plus spécialement à la réaction n° 2, qui concerne les densités de courant les plus élevées. Si on souhaite une contre-électrode en permanence à l'état décoloré - ceci par exemple pour éviter toute interférence dans les colorations, il est préférable d'utiliser la réaction n° 4, encore que celle-ci ne soit pas préférée car les densités de courant admises sont environ 6 fois plus faibles que pour la réaction n° 2. L'équilibre n° 3 est probable mais cette hypothèse n'a pas été vérifiée.

L'équilibre (2) est favorisé si on part d'un oxyde dans un rapport stoechiométrique O/Ni de préférence voisin de 1,60. Les couches seront de préférence laissées dans une atmosphère oxydante pendant une durée aussi brève que possible après leur préparation et avant l'insertion d'ions lithium, ceci afin d'éviter avant l'assemblage du système une augmentation du rapport O/Ni due à l'oxygène de l'air.

Des schémas réactionnels proposés et des considérations sur la stoechiométrie nickel-oxygène, il ressort à l'évidence que par oxyde de nickel, on doit entendre probablement une combinaison d'oxydes hydratés dans lesquels le nickel est à des degrés divers d'oxydation. De toute façon, nous utiliserons les formules :

$$Ni[O]_A \text{ et } Ni[O]_B$$

plutôt que les formules :

$$NiO(OH) \text{ et } Ni(OH)_2$$

lorsque l'oxyde de nickel majoritaire est plutôt à un état d'oxydation + 3 ou respectivement + 2 afin de distinguer les deux grands types d'oxydes de nickel hydratés utilisés, mais il s'agit là d'une convention de langage étant donné que les méthodes d'analyses utilisées ne permettent pratiquement pas de juger de l'état d'hydratation réel et donc de mettre en évidence une formulation du type :

$$Ni(OH)_x,\ nH_2O$$

La couche d'oxyde de nickel est par exemple déposée par pulvérisation cathodique réactive ou tout autre technique connue de dépôt d'un film mince d'oxyde sur un substrat en verre.

La couche du type $Ni[O]_A$ est obtenue directement par pulvérisation cathodique réactive, la couche du type $Ni[O]_B$ est obtenue par réduction dans la potasse d'une couche de type $Ni[O]_A$ en appliquant une différence de potentiel de -0,6 volt par rapport à une électrode de référence au calomel.

L'épaisseur de la couche d'oxyde de nickel est choisie de préférence entre 60 et 300 nanomètres et avantageusement entre 80 et 100 nanomètres. Des épaisseurs trop faibles sont déconseillées en raison de la plus grande fragilité des couches, tandis que des épaisseurs plus grandes conduisent à des produits moins transparents à l'état décoloré et surtout la capacité d'insertion supplémentaire d'ions lithium alors obtenue est inutile car elle dépasse la capacité propre d'insertion de la couche d'oxyde de tungstène.

Selon un premier mode de réalisation de l'invention, le matériau conducteur ionique utilisé comme électrolyte est une solution liquide de perchlorate de lithium dans du carbonate de propylène.

Selon un autre mode de réalisation de l'invention, le matériau conducteur ionique est un polymère organique conducteur au lithium. Le brevet EP-A-13 199 donne des exemples de polymères convenant à la mise en oeuvre de l'invention. De bons résultats ont été plus particulièrement obtenus avec une solution solide de perchlorate de lithium dans du polyoxyde d'éthylène. Ce polymère organique sert également de matériau adhésif pour l'assemblage d'un vitrage feuilleté, la première feuille de verre étant dotée d'une couche électroconductrice transparente et d'une couche de trioxyde de tungstène et la seconde feuille de verre d'une couche électroconductrice et de la contre-électrode.

Selon un troisième mode de réalisation de l'invention, le matériau conducteur ionique est un gel conducteur au lithium obtenu à partir d'un alcoxyde de titane conformément aux enseignements de la demande de brevet FR-A-2 593 321.

D'autres détails et caractéristiques avantageuses de l'invention sont commentés ci-après en référence aux dessins annexés qui représentent :

. **figure 1** : le profil obtenu par analyse spectrométrique de masse d'une couche d'oxyde de nickel $Ni[O]_A$ après insertion d'ions $Li^+$,

. **figure 2** : le profil obtenu par analyse spectrométrique de masse d'une couche d'oxyde de nickel $Ni[O]_B$

après insertion d'ions $Li^+$,

. **figure 3** : les cycles voltampérométriques d'une couche d'oxyde de nickel de type $[NiO_A]$et d'une couche du type $NiO_3$,

. **figure 4** : une courbe représentative de la quantité de courant acceptée par une couche d'oxyde de nickel en fonction du nombre d'heures passées à l'air.

Dans un premier temps, on a cherché à vérifier la possibilité d'insertion des ions lithium dans une couche d'oxyde de nickel. Sur un substrat en verre silicaté, on a déposé par pulvérisation cathodique réactive assistée d'un champ magnétique une couche de 350 nanomètres d'oxyde d'indium rendu conducteur par un dopage à l'étain et présentant une résistance carrée de 5 Ohms.

La couche d'oxyde de nickel est déposée par pulvérisation cathodique assistée d'un champ magnétique, en opérant sur une cible de nickel mince (de préférence de 2 mm d'épaisseur) afin de réduire son caractère ferromagnétique qui pour une cible épaisse ne permet pas la formation d'un plasma. La tension est de 250 volts. Le gaz plasmagène est à une pression de 3,33 Pa, avec un rapport oxygène-hydrogène de 80/20. La vitesse de dépôt de 3,3 nanomètres par minute. On dépose ici une couche dont l'épaisseur est d'environ 80 nanomètres.

Le substrat ainsi préparé est placé dans une solution de perchlorate de lithium dans du carbonate de propylène en faisant passer une quantité de courant donnée Q, puis après séchage l'échantillon est analysé par spectrométrie de masse des ions secondaires sous un bombardement principal d'ions oxygène positifs. Le profil obtenu est schématisé à la figure 1 où est représentée en abscisse la profondeur de l'analyse et en ordonnées le nombre de coups ou impacts reçus ; il doit être noté en premier lieu que ces courbes doivent être considérées avant tout comme qualitatives, la corrélation nombre de coups-quantité d'un ion étant très difficile à établir et que d'autre part cette technique d'analyse et le mode opératoire choisis ne permettent pas d'observer la présence d'ions oxygène et/ou hydrogène. Cette figure 1 comporte 5 courbes : la courbe 1 en traits continus épais représente le fond et est non significative dans le cadre de l'invention si ce n'est pour définir un niveau zéro. La courbe 2 en traits mixtes correspond aux ions indium ; la courbe 3 en pointillés aux ions nickel et les courbes 4 et 5 aux ions lithium, la courbe 4 en traits continus fins étant obtenue pour une quantité de courant Q de 10 milliCoulombs par centimètre carré (10 $mC/cm^2$) et la courbe 5 (petits ronds) pour une quantité de courant deux fois plus faible. On remarque que les courbes 4 et 5 sont parallèles à la courbe 3 ce qui indique une répartition uniforme des ions lithium dans la couche d'oxyde de nickel. D'autre part, la quantité de lithium insérée avec une quantité de courant de seulement 5 $mC/cm^2$ est beaucoup plus faible ce qui démontre que la quantité de lithium insérée dépend de la quantité de courant que l'on fait passer. La courbe 3 présente pour une profondeur nulle un maximum attribué à une oxydation surfacique.

Cette oxydation surfacique a été vérifiée par analyse à la microsonde d'une couche d'oxyde de nickel déposée dans les mêmes conditions que précédemment, mais cette fois de 280 nanomètres. Immédiatement après le dépôt, le rapport oxygène/nickel est de 1,60 et monte à 1,65 pour un échantillon de 10 jours.

Les couches d'oxyde de nickel juste préparées sont donc des couches dans un état métastable, qui présente avantageusement la capacité maximale d'insertion des ions lithium (voir figure 4), mais qui implique un assemblage du système assez rapidement après le dépôt de la couche d'oxyde de nickel afin de conserver ce faible rapport préféré oxygène/nickel.

Il a été également vérifié que la forme plus réduite $Ni[O]_B$ est susceptible d'insérer du lithium. Pour cela on a préparé une couche d'oxyde de nickel du type $Ni[O]_A$, dans les mêmes conditions que précédemment et on l'a réduite dans la potasse en appliquant une tension de -0,6 Volt par rapport à une électrode de référence au calomel (équilibre n° 1). Après insertion de lithium, les profils obtenus par spectrométrie de masse des ions secondaires ont été représentés à la figure 2 pour laquelle on a adopté les mêmes conventions de représentation que pour la figure 1, de sorte que les courbes 6, 7, 8,9 et 10 correspondent respectivement aux mêmes éléments que les courbes 1, 2, 3, 4 et 5. L'allure générale de ces courbes est très similaire de l'allure générale de la figure 1 et les mêmes conclusions s'appliquent donc. Par contre, on remarque que la quantité de lithium insérée est beaucoup plus réduite que pour $Ni[O]_A$ et que la courbe 10 présente un maximum en surface attribué comme précédemment à un état d'oxydation de la surface de $Ni[O]_B$ plus important.

Par la technique de voltampérométrie cyclique à balayage, il a été ultérieurement vérifié sur des couches de 200 nanomètres préparées comme précédemment que l'insertion des ions lithium était bien attribuable dans ces deux cas à une réaction électrochimique. L'allure générale des cycles obtenus est représentée à la figure 3 (courbe 11 en traits continus pour $Ni[O]_A$ et courbe 12 en pointillés pour $Ni[O]_B$). La tension indiquée en abscisse (en volts) correspond à la différence de potentiel par rapport à une électrode de référence au calomel, en ordonnées on a représenté l'intensité du courant de réponse en milliampères. L'aire non nulle de ces cycles confirme l'insertion électrochimique du lithium ; d'autre part le phénomène est bien réversible (aire inférieure 13 hachurée sensiblement de même surface que l'aire supérieure 14 autrement dit la quantité de courant insérée au cycle aller est bien récupérée au cycle retour). On vérifie également que $Ni[O]_B$ présente une

capacité d'insertion nettement moindre que $Ni[O]_A$. Enfin dans le cas de $Ni[O]_A$ la transmission lumineuse de l'échantillon au cours d'un cycle varie entre 38 et 84 % à la vitesse de balayage de 20 millivolts par seconde montrant ainsi que le lithium est bien responsable du phénomène d'électrochromisme. Un seul cycle par couche a été représenté à la figure 4 par souci de simplification de la figure, mais il faut aussi noter que l'on obtient une très bonne superposition des courbes au cours de cyclages successifs et que le phénomène évolue donc peu au cours du temps.

On a également étudié l'évolution au cours du temps de couches d'oxyde de nickel du type $Ni[O]_A$ préféré selon l'invention. Pour ce faire, on a représenté à la figure 4 la quantité de courant acceptée par une couche d'oxyde de nickel en fonction de son temps de séjour à l'air. Les différentes courbes correspondent à des conditions différentes de dépôt dues à différents rapports oxygène-hydrogène dans le plasma. Pour les courbes 15,16, 17 et 18 ces rapports sont respectivement de 80/20, 90/10, 70/30 et 60/40. La première remarque est que la capacité d'insertion diminue fortement au cours du temps et qu'il est donc préférable de sceller la cellule électrochrome dans une brève période après le dépôt de la couche d'oxyde de nickel. Un profil de spectrométrie de masse par ions secondaires sous un bombardement principal d'ions positif argon en travaillant sur des ions oxygène secondaires négatifs met d'ailleurs en évidence une oxydation de surface extrêmement rapide de ces couches. En pratique, on choisit d'opérer dans les 12 heures qui suivent le dépôt de la couche d'oxyde de nickel.

Par ailleurs, il est préférable de maintenir les couches d'oxyde de nickel dans des conditions rigoureusement anhydres jusqu'à l'assemblage qui lui est de toute façon réalisé de manière à former une cellule aussi étanche que possible comme il est bien connu de cet art. En effet, on observe que des cellules assemblées à partir de couches d'oxyde de nickel exposées au contact avec des molécules d'eau, même avec des quantités relativement mineures, vieillissent de manière non satisfaisante dans la mesure où le contraste s'affaiblit. Par spectroscopie infrarouge et notamment selon la technique dite de reflexion en modulation de polarisation, ce vieillissement a pu être corollé à la présence de groupements hydroxyles en quantités croissantes.

La comparaison des courbes 15 à 18 met également en évidence le fait que la quantité de courant et donc la quantité d'ions lithium insérés est optimale pour un rapport oxygène-hydrogène voisin de 80/20 au moment du dépôt. Toutefois pour ce qui concerne le vieillissement, les meilleurs résultats sont obtenus avec des couches déposées avec un plasma sans hydrogène; la couche initiale étant dans ces conditions à son état maximal d'oxydation.

L'intensité de la coloration d'une couche de nickel du type $Ni[O]_A$ dépend bien sûr de l'épaisseur de cette couche. Ainsi, à conditions de dépôt identiques des couches d'oxyde de nickel de 60 à 180 nanomètres présentent à l'état isolé (verre + couche ITO + NiOLi) une transmission dans le visible pour toutes les épaisseurs testées sensiblement identique et proche de 80 %. A l'état coloré, la transmission lumineuse varie assez linéairement en fonction de l'épaisseur entre une valeur de 45 % et de 18 % pour des épaisseurs de respectivement 60 et 180 nanomètres.

Il a été ensuite préparé des cellules électrochromes comportant une électrode principale en trioxyde de tungstène et une contre-électrode en oxyde de nickel du type $Ni(O)_A$. Pour cela, sur un substrat de 100 $cm^2$ en verre silicaté, on a déposé une couche d'oxyde d'indium dopée à l'étain de 350 nanomètres ayant une résistance carrée de 5 Ohms. Sur cette couche est déposée une couche de trioxyde de tungstène par évaporation thermique d'une poudre de trioxyde de tungstène de 320 nanomètres. Une seconde plaque de verre de mêmes dimensions revêtue d'une couche d'oxyde d'indium dopée à l'étain est munie d'une couche d'oxyde de nickel de 80 nanomètres, déposée par pulvérisation cathodique réactive avec un rapport oxygène-hydrogène dans le plasma de 80/20. Le rapport atomique oxygène-nickel est de 1,60. Cette couche d'oxyde de nickel est décolorée par insertion d'ions lithium. Les deux plaques ainsi préparées sont ensuite assemblées à l'autoclave au moyen d'un film de polyoxyéthylène de 50 microns au sein duquel est dissout du perchlorate de lithium. La transmission lumineuse dans le visible du système obtenu est de 73 %.

La cellule est placée dans une enceinte chaude dont la température est de 80°C. On effectue des cycles coloration/décoloration sans observer de dégradation, avec une tension de - 1,7 Volts pour la coloration et de + 0,7 Volts pour la décoloration. Pour chaque cycle, le temps de réponse du système est de 1 minute, ce qui convient bien à la réalisation d'un vitrage de bâtiment ou d'un toit ouvrant pour véhicule automobile. En phase colorée, la transmission lumineuse du système est de 32 %.

Il a été également préparé une autre cellule dans des conditions en tous points identiques à la première cellule si ce n'est que l'on substitue au film électrolytique de polyoxyéthylène un gel conducteur au lithium obtenu à partir d'alcoxyde de titane conformément aux enseignements de la demande de brevet FR-A-2 593 321.

Lorsque l'on fait cycler cette cellule à température ambiante avec une tension de coloration et de décoloration respectivement égales à - 1,7 Volts et + 0,7 Volts, on obtient en phase colorée une transmission lumineuse de 15 %, pour un temps de cycle de 1 minute.

La présente invention se rapporte plus spécialement à des systèmes électrochromes fonctionnant en transmission, mais il va de soi qu'elle peut être également appliquée à la réalisation de systèmes électrochromes fonctionnant en réflexion. Il suffit pour cela d'insérer à l'arrière du système, par exemple entre la couche d'oxyde de nickel et l'électrode conductrice transparente - ou en substitution de cette dernière - une couche métallique réfléchissante telle qu'une couche d'argent. Ce système peut alors servir notamment à la réalisation d'un rétroviseur jour et nuit pour véhicules automobiles.

## Revendications

1. Système électrochrome comportant un substrat transparent notamment en verre revêtu dans l'ordre suivant d'une couche électroconductrice transparente, d'une couche de matériau électrochrome formée d'un oxyde de métal de transition notamment de trioxyde de tungstène, d'une couche d'un matériau conducteur ionique au lithium, d'une contre-électrode et d'une autre couche électroconductrice transparente, **caractérisé en ce que** la contre-électrode présente des propriétés électrochromes par réactions d'insertion et désinsertion d'ions lithium, est composée d'une couche d'oxyde de nickel majoritairement à l'état d'oxydation + 3, et est capable de conserver cet état d'oxydation lors de ces réactions d'insertion et désinsertion, le système électrochrome étant conçu et assemblé de manière à garder ladite contre-électrode dans des conditions anhydres.

2. Système électrochrome selon la revendication 1, **caractérisé en ce que** la couche d'oxyde de nickel présente un rapport voisin de 1 atome de nickel pour 1,60 atomes d'oxygène.

3. Système électrochrome selon l'une des revendications 1 ou 2, **caractérisé en ce que** la couche d'oxyde de nickel est déposée par pulvérisation cathodique réactive.

4. Système électrochrome selon la revendication 3, **caractérisé en ce que** la pulvérisation est effectuée en présence d'un plasma comportant de l'hydrogène.

5. Système électrochrome selon l'une des revendications 3 ou 4, **caractérisé en ce que** la couche d'oxyde de nickel est déposée par pulvérisation cathodique réactive assistée d'un champ magnétique à partir d'une cible de nickel métallique d'une épaisseur voisine de 2 mm.

6. Système électrochrome selon la revendication 4 ou 5, **caractérisé en ce que** le rapport oxygène-hydrogène dans ledit plasma est voisin de 80/20.

7. Système électrochrome selon l'une des revendications 1 à 6, **caractérisé en ce que** la contre-électrode a une épaisseur comprise entre 60 et 300 nanomètres et de préférence entre 80 et 100 nanomètres.

8. Système électrochrome selon l'une des revendications 1 à 7, **caractérisé en ce que** le matériau conducteur ionique au lithium est une solution de perchlorate de lithium dans du carbonate de propylène.

9. Système électrochrome selon l'une des revendications 1 à 7, **caractérisé en ce que** le matériau conducteur ionique est un matériau macromoléculaire conducteur au lithium.

10. Système électrochrome selon la revendication 9, **caractérisé en ce que** le matériau conducteur ionique est une solution solide de perchlorate de lithium dans du polyoxyde d'éthylène.

11. Système électrochrome selon l'une des revendications 1 à 7, **caractérisé en ce que** le matériau conducteur ionique est un gel conducteur au lithium obtenu à partir d'un alcoxyde de titane.

12. Système électrochrome selon l'une des revendications 1 à 11, **caractérisé en ce que** l'assemblage du système est réalisé au plus tard 12 heures après le dépôt de la couche d'oxyde de nickel.

13. Système électrochrome selon l'une des revendications 1 à 12, **caractérisé en ce que** la couche d'oxyde de nickel est maintenue dans des conditions rigoureusement anhydres avant l'assemblage.

## Patentansprüche

1. Elektrochromes System, welches ein durchsichtiges Substrat, insbesondere Glas, umfaßt, das aufeinanderfolgend mit einer durchsichtigen elktrisch leitenden Schicht, einer Schicht aus elektrochromem Material, die aus einem Übergangsmatelloxid, insbesondere Wolframtrioxid, besteht, einer Schicht aus einem Lithiumionen leitenden Material, einer Gegenelektrode und einer anderen durchsichtigen elektrisch leitenden Schicht beschichtet ist, **dadurch gekennzeichnet,** daß die Gegenelektrode aufgrund von Einlagerungs- und Freisetzungsreaktionen der Lithiumionen elektrochrome Eigenschaften aufweist und aus einer Schicht eines Oxids des Nickels besteht, das überwiegend in der Oxidationsstufe +3 vorliegt und diese Oxidationsstufe während der Einlagerungs- und Freisetzungsreaktionen beibehalten kann, wobei das elektrochrome System derart konzipiert und zusammengebaut ist, daß die Gegenelektrode unter wasserfreien Bedingungen gehalten ist.

2. Elektrochromes System nach Anspruch 1, **dadurch gekennzeichnet,** daß die Nickeloxidschicht ein Verhältnis von etwa 1 Nickelatom auf 1,60 Sauerstoffatome aufweist.

3. Elektrochromes System nach Anspruch 1 oder 2, **dadurch gekennzeichnet,** daß die Nickeloxidschicht durch Reaktionskathodenzerstäubung aufgebracht ist.

4. Elektrochromes System nach Anspruch 3, **dadurch gekennzeichnet,** daß die Zerstäubung in Gegenwart eines wasserstoffhaltigen Plasmas durchgeführt wird.

5. Elektrochromes System nach Anspruch 3 oder 4, **dadurch gekennzeichnet,** daß die Nickeloxidschicht durch von einem Magnetfeld gestützte Reaktionskathodenzerstäubung ausgehend von einem Target aus metallischem Nickel mit einer Dicke von etwa 2 mm aufgebracht wird.

6. Elektrochromes System nach Anspruch 4 oder 5, **dadurch gekennzeichnet,** daß das Sauerstoff/Wasserstoff-Verhältnis im Plasma etwa 80/20 beträgt.

7. Elektrochromes System nach einem der Ansprüche 1 - 6, **dadurch gekennzeichnet,** daß die Gegenelektrode eine Dicke zwischen 60 und 300 und vorzugsweise zwischen 80 und 100 Nanometer aufweist.

8. Elektrochromes System nach einem der Ansprüche 1 - 7, **dadurch gekennzeichnet,** daß das Litiumionen leitende Material eine Lösung aus Lithiumperchlorat in Propylencarbonat ist.

9. Elektrochromes System nach einem der Ansprüche 1 - 7, **dadurch gekennzeichnet,** daß das ionenleitende Material ein Lithium leitender makromolekularer Stoff ist.

10. Elektrochromes System nach Anspruch 9, **dadurch gekennzeichnet,** daß das ionenleitende Material eine feste Lösung von Litiumperchlorat in Polyethylenoxid ist.

11. Elektrochromes System nach einem der Ansprüche 1 - 7, **dadurch gekennzeichnet,** daß das ionenleitende Material ein Lithium leitendes Gel ist, das ausgehend von einem Titanalkoholat hergestellt wird.

12. Elektrochromes System nach einem der Ansprüche 1 - 11, **dadurch gekennzeichnet,** daß der Zusammenbau des Systems spätestens 12 Stunden nach Aufbringen der Nickeloxidschicht erfolgt.

13. Elektrochromes System nach einem der Ansprüche 1 - 12, **dadurch gekennzeichnet,** daß die Nickeloxidschicht vor dem Zusammenbau unter streng wasserfreien Bedingungen gehalten wird.

## Claims

1. Electrochromic system comprising a transparent substrate, notably of glass, coated in the following order with a transparent, electrically conducting film, with a film of electrochromic material formed of a transition metal oxide, notably of tungsten trioxide, with a film of an ion-conducting material to lithium, with a counter-electrode and with another transparent electrically conducting film, characterized in that the counter-electrode has electrochromic properties by insertion and de-insertion reactions of lithium ions, is composed of a film of nickel oxide mainly in the + 3 oxidation state, and is capable of maintaining this oxidation state during these insertion and de-insertion reactions, the electrochromic system being designed and assembled in such a manner as to keep said counter-electrode in anhydrous conditions.

2. Electrochromic system according to Claim 1, characterized in that the nickel oxide film has a ratio in the region of 1 nickel atom to 1.6 oxygen atoms.

3. Electrochromic system according to one of Claims 1 or 2, characterized in that the nickel oxide film is deposited by reactive cathodic sputtering.

4. Electrochromic system according to Claim 3, characterized in that the sputtering is carried out in the presence of a plasma containing hydrogen.

5. Electrochromic system according to one of Claims 3 or 4, characterized in that the nickel oxide film is deposited by reactive cathodic sputtering assisted by a magnetic field from a metallic nickel target having a thickness in the region of 2 mm.

6. Electrochromic system according to Claim 4 or 5, characterized in that the oxygen-hydrogen ratio in said plasma is in the region of 80/20.

7. Electrochromic system according to one of Claims 1 to 6, characterized in that the counter-electrode has a thickness lying between 60 and 300 nanometres and preferably between 80 and 100 nanometres.

8. Electrochromic system according to one of Claims 1 to 7, characterized in that the ion-conducting material to lithium ic a solution of lithium perchlorate in propylene carbonate.

9. Electrochromic system according to one of Claims 1 to 7, characterized in that the ion-conducting material is a macromolecular material conducting to lithium.

10. Electrochromic system according to Claim 9, characterized in that the ion-conducting material is a solid solution of lithium perchlorate in polyethylene oxide.

11. Electrochromic system according to one of Claims 1 to 7, characterized in that the ion-conducting material is a gel conducting to lithium obtained from a titanium alkoxide.

12. Electrochromic system according to one of Claims 1 to 11, characterized in that the assembling of the system is carried out at latest 12 hours after the deposition of the nickel oxide film.

13. Electrochromic system according to one of Claims 1 to 12, characterized in that the nickel oxide film is kept in rigorously anhydrous conditions before the assembling.

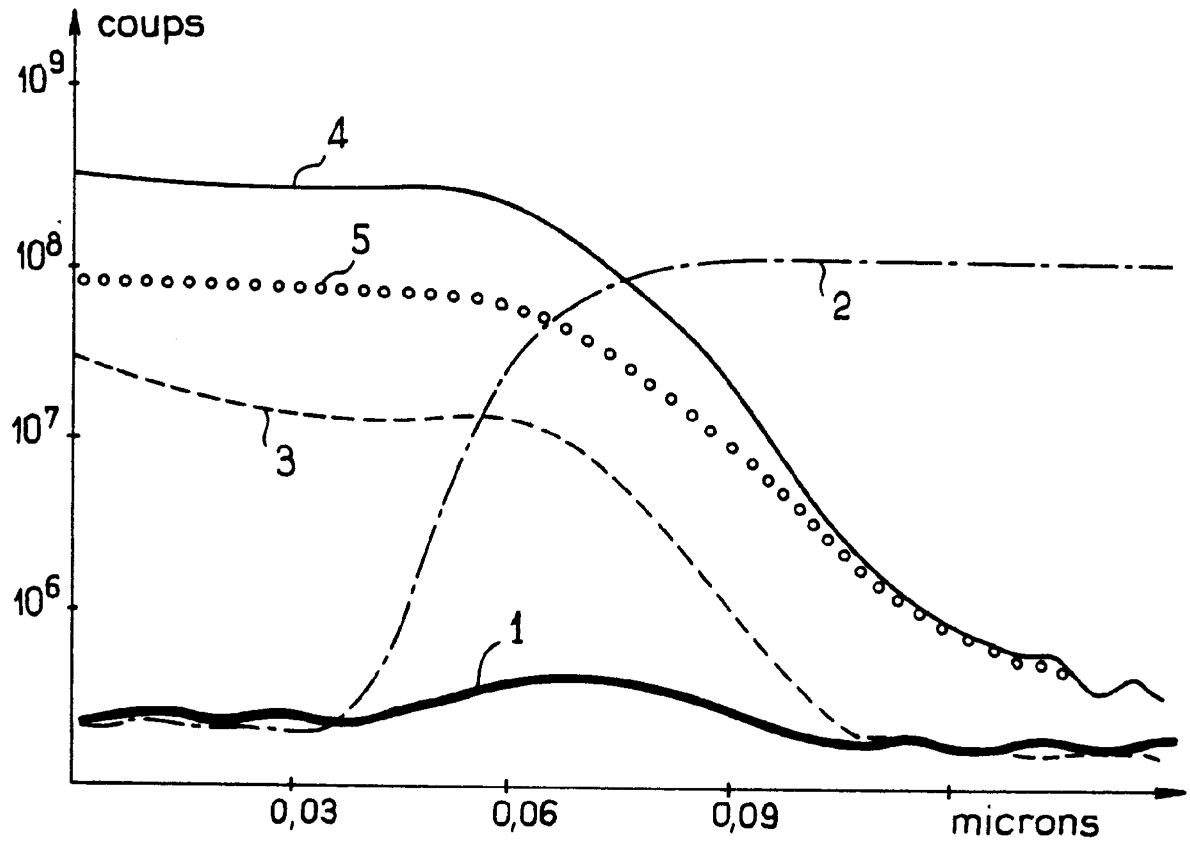
coups
$10^9$
$10^8$
$10^7$
$10^6$
4
5
2
3
1
0,03
0,06
0,09
microns

FIG_1

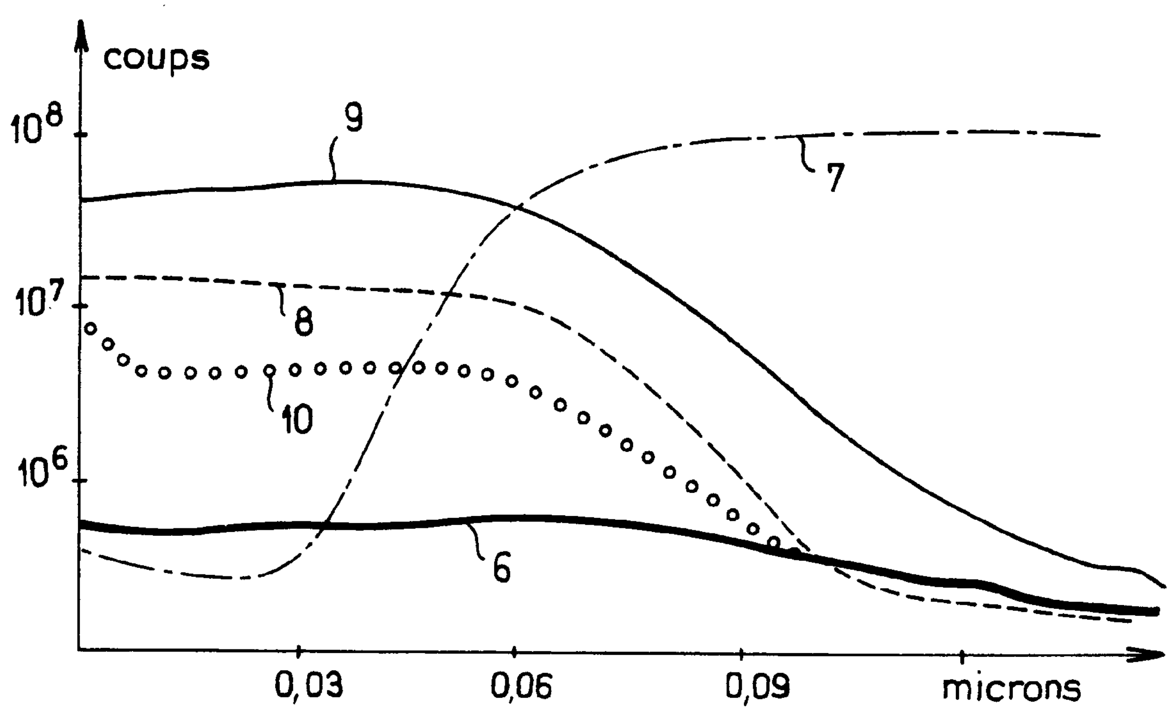
coups
$10^8$
$10^7$
$10^6$
9
7
8
10
6
0,03
0,06
0,09
microns

FIG_2

FIG_3

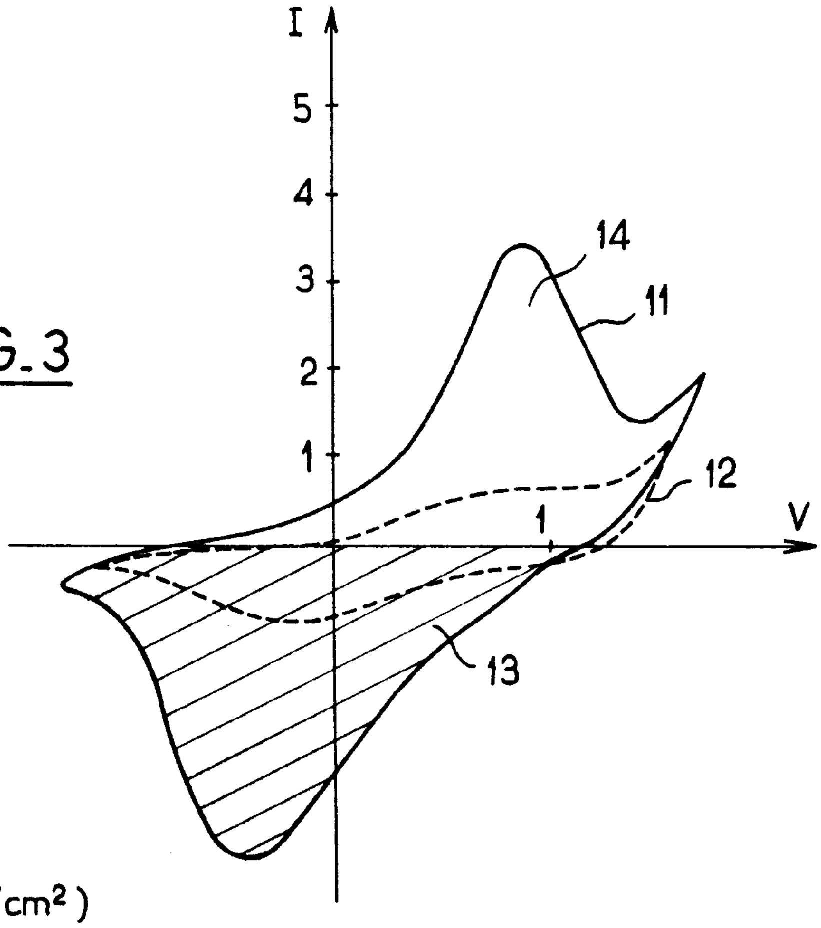
I
5
4
3
2
1
V
1
14
11
12
13

FIG_4

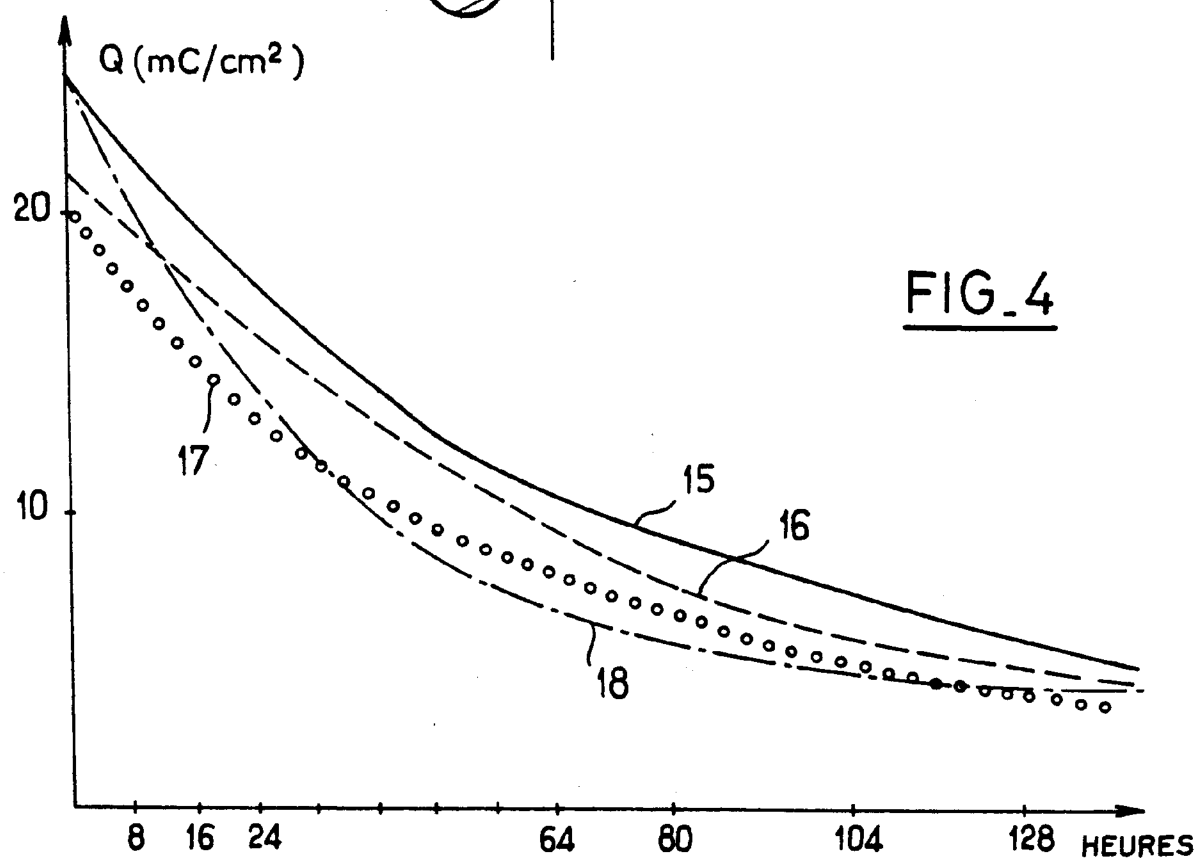
Q (mC/cm²)
20
10
15
16
17
18
8
16
24
64
80
104
128
HEURES